# EUROPEAN PATENT APPLICATION

(11) **EP 1 790 459 A2**
(43) Date of publication of application: **30.05.2007**
(21) Application number: 06255989.3
(22) Date of filing: 23.11.2006
(51) Int. Cl.: B29C 45/76, B29C 45/84

(54) **Abnormality detecting apparatus for mold clamping device**

(30) Priority: 28.11.2005 JP 2005342138
(71) Applicant: FANUC LTD, Minamitsuru-gun, Yamanashi 401-0597 (JP)
(72) Inventor: Nishimura, Koichi, Shizuoka 410-1115 (JP); Hashimoto, Nobuaki, Fujiyoshida-shi Yamanashi 403-0005 (JP)
(74) Representative: Billington, Lawrence Emlyn

(57) **Abstract**

An abnormality detection apparatus for a mold clamping device, having a simple configuration that can be constructed inexpensively. A dog is mounted on the crosshead of a toggle mechanism of the mold clamping device and a proximity switch is mounted on a rear platen. The shape of the dog and the location of the mounting of the proximity switch are adjusted so that the proximity switch switches ON at a mold touch position of mold touch and switches OFF when the toggle mechanism, which generates a predetermined clamping force, locks up. An alarm is output if the length of time during which the proximity switch is ON during the process of clamping the mold or opening the mold exceeds a predetermined reference value. If in the interval from mold touch to lock-up a large load is put on a servo motor and a belt that drive the crosshead and an abnormality such as breakage of the belt or the like occurs during this interval, it can be detected at once. Simply by adding a dog and a proximity switch enables breakage of the belt to be detected with ease.

## Description

### BACKGROUND OF THE INVENTION

### 1. Field of the Invention

The present invention relates to an abnormality detecting apparatus for a mold clamping device in an electric injection molding machine.

### 2. Description of the Related Art

In an electric injection molding machine, the movable part of the injection molding machine is driven by a motor. Typically, the torque of the motor is transmitted to the movable part of the injection molding machine through a belt transmission mechanism. Even in a mold clamping mechanism that uses a toggle mechanism, the motor torque is converted by a conversion mechanism from the rotary movement of a ball screw/nut mechanism or the like to straight-line movement, moving a crosshead of the toggle mechanism so as to move a movable one of mold halves to perform closing, clamping and opening of the mold halves.

When a toggle-type clamping mechanism is driven by a motor via a belt and a ball screw/nut mechanism or the like, after the movable one of the mold halves touches the stationary one of the mold halves, a large load is put on the belt during the clamping that generates a clamping force (the interval from mold touch to the attainment of a predetermined clamping force) and while the mold is being opened (the interval from the position at which the clamping force is generated to the opening of the mold), abnormalities such as breakage of the belt sometimes occur. As a result, despite the occurrence of an abnormality such as the broken belt and the fact that the mold clamping device has become inoperable, the continuous injection molding operation is continued and the injection molding machine malfunctions.

Accordingly, a technology has been developed that has as its object to detect an abnormality such as a broken belt or the like and to prevent the malfunctioning of the injection molding machine.

For example, a method is known that mounts a pulse generator on the crosshead of a toggle-type clamping mechanism, counts a number of pulses generated in proportion to the amount of movement of the crosshead, compares this detected pulse number with a second pulse number that is proportional to a detected number of revolutions of a motor generated by a pulse generator provided on the driving side motor, and detects an abnormality when the ratio exceeds a predetermined range (JP 7-16901A), as is a method that provides a first pulse generating means that detects the rotation of a driving shaft (on the motor side), a second pulse generating means that detects the rotation of a driven shaft that is driven via a power transmission belt, counts the number of clock pulses in the interval between pulses generated from the first and second pulse generating means respectively, obtains and compares the rotation speeds of the driving shaft and the driven shaft, and detects an abnormality when the difference between the two exceeds a threshold value (JP 2003-174786A).

In addition, a method is known that links a driven pulley and a driving pulley mounted on the motor by a belt and provides one or more projections on that driven pulley, and also provides a proximity switch that detects these one or more projections and detects a breakage of the belt by the presence of ON-OFF signals from that proximity switch (JP 2003-74649A), as are such methods as detecting tooth-skipping of a timing belt by the passage of projections detected by a proximity switch (JP 2003-184967A), detecting an abnormality in the belt by detecting the tension on the belt (JP 11-262932A), and using the fact that the torque of the motor that drives the belt transmission mechanism declines when the belt breaks to detect belt breakage by the torque of the motor (JP 6-182845A).

However, in the methods described in JP 7-16901 A and JP 2003-17478A, which provide measuring means such as pulse generators on each of the motor side and the driven side and detect abnormalities in the belt transmission mechanism, the cost of the injection molding machine increases by the extent to which measuring means such as pulse generators must be provided. In addition, with the method described in JP 2003-74649A, which detects abnormalities of the belt by whether or not the driven-side pulley is rotating, even if the driven-side pulley is rotating there is no guarantee that the crosshead and the movable mold are moving properly, and consequently, there are times when this method cannot detect abnormality in the movement of the crosshead or the movable mold due to some abnormality with the transmission mechanism. Further, the methods described in JP 2003-184967A and JP 11-262932A require tension detection means or measuring means that detect the amount of rotation, which increases the cost of the injection molding machine. Moreover, in the method described in JP 6-182845A, if the mold clamping device uses a toggle mechanism, in a state in which the toggle mechanism extends and generates a predetermined clamping force, the toggle mechanism itself generates a clamping force that sharply reduces the output torque of the motor that drives the crosshead of that toggle mechanism, making it difficult to detect any abnormality in the belt transmission mechanism (such as breakage of the belt) from the motor output torque.

### SUMMARY OF THE INVENTION

The present invention provides an abnormality detection apparatus for a mold clamping device, capable of reliably detecting abnormalities in a driving force transmission mechanism such as a belt transmission mechanism at low cost.

An abnormality detecting apparatus of the present invention is applied to a mold clamping device for clamping mold halves using a toggle mechanism having a crosshead in an electric injection molding machine. According to an aspect of the present invention, the abnormality detecting apparatus comprises: first sensing means for sensing arrival of the crosshead at a first position; second sensing means for sensing arrival of the crosshead at a second position; measuring means for measuring time lapsing from the sensing of the arrival of the crosshead at the first position by the first sensing means in a mold clamping process; and means for outputting an abnormality detection signal when the lapsing time measured by the measuring means exceeds a reference time before the arrival of the crosshead at the second position is sensed by the second sensing means.

According to another aspect of the present invention, the abnormality detecting apparatus comprises: first sensing means for sensing arrival of the crosshead at a first position; second sensing means for sensing arrival of the crosshead at a second position; measuring means for measuring time lapsing from the sensing of the arrival of the crosshead at the second position by the second sensing means in a mold opening process; and means for outputting an abnormality detection signal when the lapsing time measured by the measuring means exceeds reference time before the arrival of the crosshead at the first position is detected by the first sensing means.

The first and second sensing means may comprise a dog and a proximity switch for sensing proximity of the dog. In this case, one proximity switch or two proximity switches may be provided.

The first position may be set to correspond to a mold touch position where the mold halves touch each other or a position where the mold halves are separated by a predetermined distance from the mold touch position. The second position may be set to correspond to a lock-up position where the clamping of the mold halves is completed.

According to still another aspect of the present invention, the abnormality detecting apparatus comprises: first sensing means for sensing arrival of the crosshead at a first position; second sensing means for sensing arrival of the crosshead at a second position; measuring means for measuring time lapsing from the sensing of the arrival of the crosshead at the second position by the second sensing means in a mold opening process; and means for outputting an abnormality detection signal when the lapsing time measured by the measuring means exceeds reference time before the arrival of the crosshead at the first position is detected by the first sensing means.

The reference time may be predetermined based on the mold touch position, the lock-up position and a speed or acceleration/deceleration of the clamping or the opening of the mold halves.

With the above configuration, an abnormality in the mold clamping device such as breakage of a belt of the belt transmission mechanism can be reliably detected at low cost by providing simple sensing means for sensing the position of the crosshead.

### BRIEF DESCRIPTION OF THE DRAWINGS

FIG. 1 is a diagram showing one embodiment of a mold clamping device of an injection molding machine adapting a mold clamping device abnormality detection apparatus of the present invention;
FIG. 2 is a diagram showing a first embodiment of a dog and a proximity switch in the first embodiment of the present invention;
FIG. 3 is a diagram showing a second embodiment of a dog and a proximity switch in the first embodiment of the present invention;
FIG. 4 is a schematic diagram of a controller of an injection molding machine that constitutes the mold clamping device abnormality detection apparatus in the first embodiment of the present invention; and
FIG. 5 is a flow chart illustrating a process of detecting an abnormality in the mold clamping device of the first embodiment of the present invention.

### DETAILED DESCRIPTION

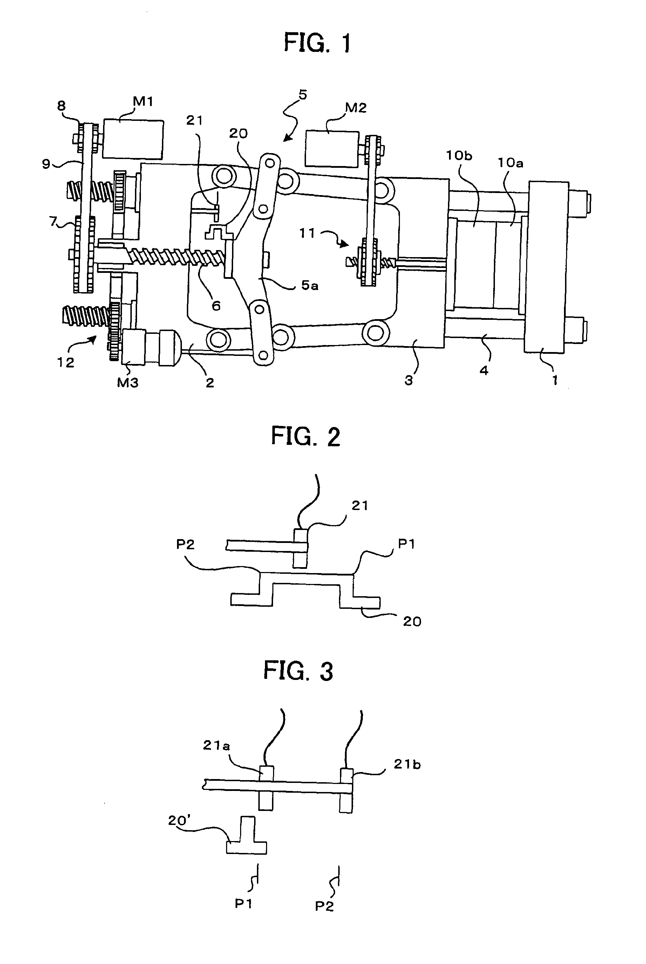

FIG. 1 is a diagram showing an embodiment of a mold clamping device of an injection molding machine adapting a mold clamping device abnormality detection apparatus of the present invention. The mold clamping device abnormality detection apparatus of the present invention differs from the conventional art in that a dog 20 and a proximity switch 21 that comprise an abnormality detection apparatus are added to the conventional toggle-type mold clamping device.

A rear platen 2 is linked to a stationary platen 1 fixedly mounted on a base of the injection molding machine by a plurality of tie bars 4. A movable platen 3 is guided by the tie bars 4 and disposed so as to move freely. A toggle mechanism 5 is placed between the rear platen 2 and the movable platen 3, with a crosshead 5a of the toggle mechanism 5 mounted on a ball nut that engages a ball crew 6, such that rotation of the ball screw 6 moves the ball nut and the crosshead 5a in the axial direction.

The ball screw 6 is mounted on the rear platen 2 so as to rotate freely while remaining immobile in the axial direction, with a toothed pulley 7 mounted on one end of the ball screw 6. A servo motor M1 for a mold clamping device that drives the toggle mechanism 5 is mounted on the rear platen 2. A timing belt 9 is wound between a toothed pulley 8 mounted on an output shaft of the servo motor M1 and the toothed pulley 7 mounted on the ball screw 6.

A stationary mold half 10a is mounted on the stationary platen 1 and a movable mold half 10b is mounted on the movable platen 3. An ejector mechanism 11 that ejects a molded article from inside the mold is provided on the movable platen 3. Reference symbol M2 designates a servo motor that drives the ejector mechanism 11, with an ejector pin driven by the servo motor M2 via a belt transmission mechanism and a ball screw/nut mechanism. A mold thickness adjustment mechanism 12 that advances and retracts the rear platen 2 along the tie bars 4 is provided on the distal end of the tie bars 4. Reference symbol M3 designates a motor that drives the mold thickness adjustment mechanism 12.

After the mold thickness adjustment mechanism 12 motor M3 is activated, and the thickness of the mold to be used as well as the position of the rear platen 2 are determined by moving the rear platen 2 so as to generate a set mold clamping force at a lock-up position to which the toggle mechanism 5 link is extended and adjusting for the thickness of the mold, the mold clamping device servo motor M1 is driven, the toggle mechanism 5 crosshead 5a is advanced (that is, moved to the right in FIG. 1), the movable platen 3 as well as the movable mold half 10b are advanced, the mold is closed and the mold is clamped. This is the mold clamping process. Then, resin is injected into the interior of the mold by an injection mechanism, not shown, pressurized, and cooled, after which the servo motor M1 is activated and the mold is opened in the execution of a mold opening process. Once the mold is opened, the ejector mechanism 11 servo motor M2 is activated and the molded article is removed from the interior of the mold.

The foregoing constitutes the structure and operation of the mold clamping device, which are the same as the structure and operation of the conventional powered toggle-type mold clamping device.

The present invention adds to the mold clamping device an abnormality detection apparatus that detects abnormalities in the mold clamping device. As one part of this abnormality detection apparatus, a dog 20 is mounted on the crosshead 5a and a proximity switch 21 that detects the dog 20 is provided on the rear platen 2 opposite the dog 20.

Over an interval extending from a mold touch position to the lock-up of the toggle mechanism 5 and the generation of the pre-set mold clamping force in the mold clamping process, as well as in an interval from the start of the opening of the mold to the retreat of the movable mold half 10b beyond even the mold touch position and the opening of the mold in the mold opening process, the load on the servo motor M1 that drives the mold clamping device and on the timing belt 9 or other such belt transmission mechanism is large. As a result, in this interval, there is a strong possibility that an abnormality in the belt transmission mechanism, such as breakage of the timing belt 9, will occur. Consequently, in this embodiment, the dog 20 and the proximity switch 21 detect the interval of movement of the crosshead 5a in the interval from the mold touch position to the lock-up f the toggle mechanism 5 and detect any abnormality in the belt transmission mechanism from the movement time of the crosshead 5a in this interval.

FIG. 2 is a diagram illustrating a first embodiment of the dog 20 and the proximity switch 21 (this first embodiment is that shown in FIG. 1). The proximity switch 21 outputs an ON signal when a projecting surface (detection surface) of the dog 21 approaches the proximity switch 21. As shown in FIG. 1, the crosshead 5a moves to the right, closing and clamping the mold in the mold clamping process, and the proximity switch 21 is disposed so as to detect the right edge of the projecting surface (the detection surface) of the dog 20 that moves together with the crosshead 5a at a mold touch position or when the mold is open at a predetermined distance from the mold touch position. Specifically, during the process of clamping the mold, when the crosshead 5a and the dog 20 have moved to the mold touch position or to a position removed a predetermined distance from the mold touch position (hereinafter this position is called a first position P1), the proximity switch 21 detects the right edge of the projecting surface (the detection surface) of the dog 20 and switches ON. Then, at a position at which the toggle mechanism 5 extends and locks up and generates a pre-set clamping force (hereinafter this position is called a second position P2), the left edge of the projecting surface (the detection surface) of the dog 20 is positioned opposite the proximity switch 21 and the proximity switch 21 switches OFF. In this first embodiment, the dog 20 and a single proximity switch 21 constitute first and second means for detecting the first position P1 and the second position P2.

In the interval from mold touch to toggle mechanism 5 lock-up and generation of the pre-set clamping force, the amount of movement of the crosshead 5a changes depending on the size of the pre-set clamping force. However, since the extent of change is slight, it is sufficient if the length of the projecting surface (the detection surface) of the dog 20 is given a certain amount of leeway, that is, a length extending from a position prior to mold touch to the lock-up position. Specifically, differences in the pre-set clamping force produce slight variations in the distance between the mold touch position and the first position P1. In addition, the length of the projecting surface (the detection surface) of the dog 20 may be made adjustable, and further, multiple dogs 20 having different projecting surface (detection surface) lengths may be easily provided, with the optimum dog 20 mounted on the crosshead 5a.

FIG. 3 is a diagram showing a second embodiment of the dog and the proximity switch in the first embodiment of the present invention. In this embodiment, two proximity switches 21 a, 21 b detect a dog 20', with the first proximity switch 21 a disposed at a position at which it detects the first position P1 described above and switches ON and the second proximity switch 21 b positioned at a position at which it detects the second position P2 and switches ON. It should be noted that the second proximity switch 21b maintains an ON state in a state in which the movement of the crosshead 5a has stopped in a lock-up state.

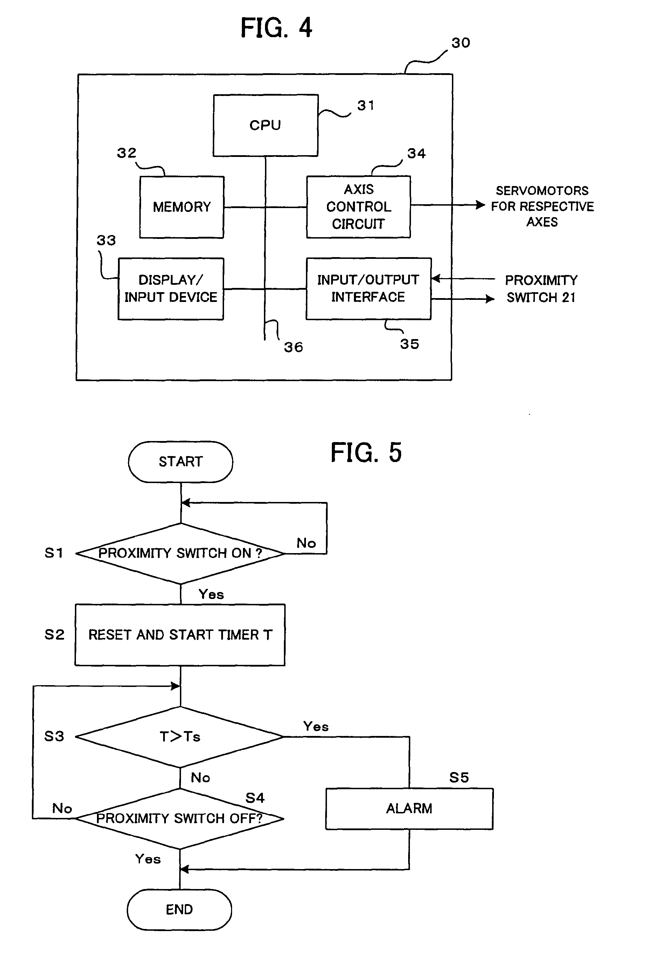

FIG. 4 is a block diagram of essential parts of a controller for controlling the injection molding machine.

The structure of a controller 30 is the same as that of the conventional controller, an outline of which is shown schematically in FIG. 4. The controller 30 comprises a processor (CPU) 31, a ROM, RAM or other such memory 32, a display/input device 33 composed of a display device consisting of a CRT or LCD and input means consisting of a keyboard and the like, an axial control circuit 34 that controls the driving of the servo motors that move the movable parts of the injection molding machine such as the mold clamping device and the injection mechanism, and an input/output interface, all connected by a bus 36.

Although the structure of the above-described controller 30 differs not at all from the conventional injection molding machine controller 30, it does differ from the conventional art insofar as software for detecting abnormalities in the mold clamping device is loaded into the memory 32 in order to configure the controller 30 as the mold clamping device abnormality detection apparatus of the present invention. In addition, the proximity switches 21 (21 a, 21 b) described above are connected to the input/output interface 35 in relation to this invention.

FIG. 5 is a flow chart illustrating steps in the processes of clamping the mold and of opening the mold that the processor 30 of the controller 30 executes as the mold clamping device abnormality detection apparatus.

The steps shown in FIG. 5 are of an example in which a combination of the dog 20 and the proximity switch 21 of the first embodiment shown in FIG. 1 and FIG. 2 is used.

When the mold clamping process is started, the processor 31 starts the mold clamping device abnormality detection processing shown in FIG. 5. First, it is determined whether or not the proximity switch 21 is ON. As the crosshead 5a advances and arrives at either the mold touch position or a position removed a predetermined distance from the mold touch position at which the mold is opened first position P1, the proximity switch 21 switches ON. The ON signal from the proximity switch 21 is detected (step S1) and the processor 31 resets and starts a timer T (step S2). Next, the processor 31 determines whether or not the time measured by the timer T exceeds a pre-set reference time Ts, and determines whether or not the proximity switch 21 has switched OFF (step S3, S4). If the proximity switch 21 switches OFF before the time measured by the timer T reaches the reference time, mold clamping device abnormality detection processing ends. If the proximity switch 21 does not switch OFF and the time measured by the timer T exceeds the pre-set reference time Ts, an alarm signal is output and the operation of the injection molding machine is stopped (step S5).

The pre-set reference time Ts is set so as to be slightly longer than the time from when the proximity switch 21 detects the projecting surface (the detection surface) of the dog 20 and outputs an ON signal to when the proximity switch 21 outputs an OFF signal when the mold clamping operation is proceeding normally. This time is obtained from a pre-set lock-up speed when the mold clamping device clamps the mold and the length of the projecting surface (the detection surface) of the dog 20, in other words the distance from the fist position P 1 to the second position P2, which is to say that this time is obtained from the pre-set mold touch position, lock-up position, and lock-up speed.

In addition, in the mold opening process as well, mold clamping device abnormality detection processing like that shown in FIG. 5 is executed. When opening of the mold is started the processor 31 starts the processing shown in FIG. 5. However, the difference between this processing and the processing carried out during the mold clamping process is that the value that is set as the reference time Ts is different. During the mold opening process, the crosshead 5a is accelerated from a stopped state until it reaches the pre-set mold opening speed, after which the crosshead 5a is retracted (in a direction in which the mold is opened) at that mold opening speed. The reference time Ts is set based on the acceleration speed and the mold opening speed, the mold touch position and the lock-up position. The only difference between this mold opening process abnormality detection processing and the mold clamping process abnormality detection processing is the value of this reference time Ts.

In addition, in a case in which the abnormality detection apparatus is composed of two proximity switches 21 and the dog 20' shown in FIG. 3, in the abnormality detection processing carried out during the mold clamping process, step S 1 shown in FIG. 5 changes to determining if the first proximity switch 21a that detects the first position P1 is ON, and step S4 changes to determining whether the second proximity switch 21 b that detects the second position P2 is ON. The remainder of the processing is the same as that in the case of the dog 20 and the proximity switch 21 of the first embodiment shown in FIG. 2.

In addition, in abnormality detection processing during the mold opening process, since the second proximity switch 21 b is ON in the lock-up state, step S 1 shown in FIG. 5 changes to determining if the second proximity switch 21 b has switched OFF. Alternatively, the determination of step S 1 may be eliminated and step S2 commenced immediately after the start of opening of the mold. In addition, step S4 changes to determining if the first proximity switch 21 has switched ON. The rest is the same as the processing shown in FIG. 5.

When the opening of the mold is started, it is determined whether or not the second proximity switch 21 b has switched OFF (step S1). If the second proximity switch 21b is OFF, processing proceeds to step S2. Alternatively, step S2 may be executed immediately after the start of opening of the mold without making the determination in step S 1 as to whether the second proximity switch 21 b has switched OFF and the timer T may be reset and starts counting (step S2). Then, it is determined whether or not the timer T has exceeded the pre-set reference time Ts (step S2) and whether or not the first proximity switch 21a is ON (step S4). If the first proximity switch 21 a switches ON before the timer T reaches the reference time, abnormality detection processing ends. If the time measured by the timer T exceeds the reference time Ts, an alarm is output and the operation of the injection molding machine is stopped (step S5).

In the above-described embodiments, the dog 20 and the proximity switch 21 (21 a, 21 b) are used to as the detection means for detecting the passage of the crosshead 5a through the first position P1 and the second position P2. However, the present invention is not limited thereto, and alternatively the detection means may be constituted as a limit switch, a light sensor or the like.

It should be noted that, since the movable platen 3 and the movable mold half 10b move together with the crosshead 5a, it would seem possible to detect the movement of the movable platen 3 or the movable mold half 10b from mold touch to toggle mechanism lock-up with the detection means. However, the amount of movement of the movable platen 3 or the movable mold half 10b from mold touch to toggle mechanism lock-up is small relative to the amount of movement of the crosshead 5a, and thus more accurate detection can be achieved by detecting the position of the crosshead 5a.

## Claims

1. An abnormality detecting apparatus for a mold clamping device for clamping mold halves using a toggle mechanism having a crosshead in an electric injection molding machine, said apparatus comprising:
first sensing means for sensing arrival of the crosshead at a first position;
second sensing means for sensing arrival of the crosshead at a second position;
measuring means for measuring time lapsing from the sensing of the arrival of the crosshead at the first position by said first sensing means in a mold clamping process; and
means for outputting an abnormality detection signal when the lapsing time measured by said measuring means exceeds a reference time before the arrival of the crosshead at the second position is sensed by said second sensing means.

2. An abnormality detecting apparatus for a mold clamping device for clamping mold halves using a toggle mechanism having a crosshead in an electric injection molding machine, said apparatus comprising:
first sensing means for sensing arrival of the crosshead at a first position;
second sensing means for sensing arrival of the crosshead at a second position;
measuring means for measuring time lapsing from the sensing of the arrival of the crosshead at the second position by said second sensing means in a mold opening process; and
means for outputting an abnormality detection signal when the lapsing time measured by said measuring means exceeds reference time before the arrival of the crosshead at the first position is detected by said first sensing means.

3. An abnormality detecting apparatus for a mold clamping device according to claim 1 or 2, wherein said first and second sensing means comprise a dog and a proximity switch for sensing proximity of the dog.

4. An abnormality detecting apparatus for a mold clamping device according to claim 3, wherein one proximity switch is provided.

5. An abnormality detecting apparatus for a mold clamping device according to claim 3, wherein two proximity switches are provided.

6. An abnormality detecting apparatus for a mold clamping device according to any one of claims 1-5, wherein the first position corresponds to a mold touch position where the mold halves touch each other or a position where the mold halves are separated by a predetermined distance from the mold touch position.

7. An abnormality detecting apparatus for a mold clamping device according to any one of claims 1-6, wherein the second position corresponds to a lock-up position where the clamping of the mold halves is completed.

8. An abnormality detecting apparatus for a mold clamping device for clamping mold halves using a toggle mechanism having a crosshead in an electric injection molding machine, said apparatus comprising:
sensing means for sensing arrival of the crosshead at a position corresponding to a mold touch position where the mold halves touch each other or to a position where the mold halves are separated by a predetermined distance from the mold touch position;
measuring means for measuring time lapsing from a start of opening the mold halves in a mold opening process; and
means for outputting an abnormality detection signal when the lapsing time measured by said measuring means exceeds reference time before the arrival of the crosshead is detected by said sensing means.

9. An abnormality detecting apparatus for a mold clamping device according to any one of claims 1-8, wherein the reference time is predetermined based on the mold touch position, the lock-up position and a speed or acceleration/deceleration of the clamping or the opening of the mold halves.
